# EUROPEAN PATENT SPECIFICATION

(11) **EP 3 341 273 B1**
(45) Date of publication and mention of the grant of the patent: **14.10.2020**
(21) Application number: 16781534.9
(22) Date of filing: 25.08.2016
(51) Int. Cl.: B62J 7/08, B62J 9/00, B62J 11/00

(54) **DEVICE FOR FASTENING A PORTABLE OBJECT TO A VEHICLE**
VORRICHTUNG ZUR BEFESTIGUNG EINES TRAGBAREN OBJEKTS AN EINEM FAHRZEUG
DISPOSITIF SERVANT À FIXER UN OBJET PORTABLE À UN VÉHICULE

(30) Priority: 25.08.2015 BE 201505535
(43) Date of publication of application: 04.07.2018
(73) Proprietor: Curana Invest bvba, 8850 Ardooie (BE)
(72) Inventor: VENS, Dirk, 8800 Roeselare (BE)
(74) Representative: Cardoen, Annelies Andréa C.
(86) International application number: PCT/IB2016/001204
(87) International publication number: WO 2017/033054

(56) References cited:
- EP-A1- 0 477 010
- EP-A1- 0 708 016
- WO-A1-97/38892
- WO-A1-2011/098897
- DE-A1- 3 133 930
- DE-A1-102009 030 000
- DE-C1- 4 302 949
- DE-U1-202005 000 003
- GB-A- 446 331
- GB-A- 840 941
- GB-A- 2 400 088
- NL-C- 83 446
- US-A- 3 903 944
- US-A- 4 266 703
- US-A- 4 345 703
- US-A- 4 671 438
- US-A- 4 852 778
- US-A- 5 579 971
- US-A- 5 810 230
- US-A1- 2010 006 721

## Description

This invention relates, on the one hand, to a device for detachably fastening a portable object to a vehicle such as a bicycle or a moped, comprising a first coupling device, which is fastenable to and/or is at least partially integrated in a component of a vehicle and which comprises a coupling edge and at least one first coupling means, and a second coupling device, which is fastenable to and/or is at least partially integrated in an object or a component thereof and which comprises edge coupling means to connect the second coupling device detachably to the coupling edge, and comprises a second coupling means, which is provided to be detachably coupled to the first coupling means, wherein the coupling devices are provided to extend in the coupled state, according to an intermediate coupling plane, one opposite the other, and in that the coupling edge and the edge coupling means can be coupled by a relative movement of the coupling devices according to a first motional direction which is virtually parallel to the said coupling plane and wherein the coupling edge and the edge coupling means are constructed such that the first and the second coupling device are connected to each other in a mutually rotatable manner through the connection of the coupling edge and the edge coupling means, and in that the first and the second coupling means can be coupled through a mutual rotation of the coupling devices coupled by the coupling edge and the edge coupling means.

This invention relates, on the other hand, also to an assembly of a vehicle, such as a bicycle or a moped, and a portable object which is detachably fastenable to that vehicle, wherein a component of the vehicle comprises a first coupling device, comprising a coupling edge and at least one first coupling means, and wherein the object comprises a second coupling device, comprising edge coupling means to detachably connect the second coupling device to the coupling edge, and comprising a second coupling means, which is provided to be detachably coupled to the first coupling means.

By the term 'portable object' is in this patent application meant, for example, a bag, a basket, a rucksack, a bin or a suitcase, or more generally any object which is provided to act as a container for the transfer of other products. The portable object can, however, also be an accessory of the vehicle, such as, for example, a child seat, a battery, a pump or a tool. Finally, the portable object can also be any utility object which it is wished to transport with the vehicle, such as, for example, a buggy, a folding chair or an umbrella.

This invention relates, in particular, to a device of this type for fastening a portable object to a bicycle, inclusive of an electric bicycle, a moped or a motor cycle and the like.

Fastening devices of the type described above, for fastening a bag or a basket to the luggage carrier or to the frame of a bicycle, are known.

A known device comprises a coupling device which is fastenable to the luggage carrier of a bicycle and is provided with three first click connection elements, which are each fastened to the bicycle at a different place. Complementary second click connection elements are fastened at corresponding places to the back of a bag. For the fastening of the bag, every second click connection element must be positioned precisely opposite its associated first click connection element, which is not simple, especially not if the bag is full and is relatively heavy. The fastening is hence frequently difficult and time-consuming.

There are also bags which, on their back, are provided with two or more hooks which are provided to, in any chosen position, hook onto a horizontally extending elongate component of the luggage carrier, and which further also comprise a strap with which the bag can be secured to the bicycle at a different place. The strap is then, for example, placed around a vertically running component of the luggage carrier. Instead of a strap, the bag can comprise a hook, which is provided to hook laterally in place behind an obliquely upward running component of the luggage carrier. In yet other known embodiments, on the bag there is provided, instead of a strap or a hook, a click connection element, which is provided to cooperate with a corresponding click connection element on the bicycle. As a result of this additional fastening point, the bag is fastened to the bicycle in a more or less stable position. Thus the bag, even when the bicycle is in an oblique position or is being ridden over a bumpy terrain, will be held in its fastening position against the upward running parts of the luggage carrier.

These fastening devices also have various drawbacks, however. A first drawback consists in the fact that the bag cannot be fastened to all types of luggage carrier. Indeed, the luggage carrier must possess an elongate element of limited transverse dimension, which extends horizontally and according to the longitudinal direction of the bicycle and onto which the hooks can hook at a suitable hook-in place. This hook fastening is frequently prevented by components of the luggage carrier or of the bicycle. Luggage carriers are often constructed with transversely running elements which connect to the elements extending according to the longitudinal direction, so that at the hook-in place there can be insufficient space to admit the hooks of a bag between two transversely running elements, or so that the bag cannot be fastened to the luggage carrier at a suitable place.

Once the bicycle bag has been hooked onto an element of the luggage carrier, this bag must also be shifted in the horizontal direction in order to ensure that the additional fastening means is positioned opposite a component of the bicycle or opposite a click connection element in order to be able to realize this additional fastening also.

NL 83446 discloses a bag and bicycle, wherein the bag can be fastened to a luggage carrier of a bicycle. The luggage carrier comprises rods and the bag comprises two pairs of hooks which are slidably connected to each other with the aid of a spring. To connect the bag to the luggage carrier, one pair of hooks is hooked around the corresponding rod. Then one pulls upon the bag and rotates the bag towards the luggage carrier and then one releases said bag. Then these other pair of hooks, hook around the corresponding rod. Said pulling is not easy, especially if the bag has a certain weight. Also this type of connection is only possible for luggage carriers comprising rods.

The object of this invention is therefore to provide a fastening device of this type, with which any portable object can be fastened by a simple movement, in a quick and easy manner, to a vehicle such as a bicycle or a moped, and the usability of which is also much less dependent on the characteristics of the vehicle component to which the object is fastened, so that the device is much more user friendly and more widely applicable than the existing fastening devices. An additional object of this invention is to provide a fastening device whereof the second coupling device can be aesthetically connected to the object, or integrated in the object.

The above objects are achieved by providing a device for detachably fastening a bag to a vehicle, having the characteristics indicated in the first paragraph of this description, wherein, according to this invention, the coupling edge and the edge coupling means are connectable in several relative positions of the coupling devices, whilst the first and second coupling means are couplable only in one of the said relative coupling positions of the coupling devices, and wherein the coupling edge and/or the edge coupling means comprise positioning means to position the coupling devices with connected coupling edge and edge coupling means, according to the longitudinal direction of the coupling edge, in the said relative coupling position in which the first and second coupling means are couplable, and wherein the first and second coupling means are provided to be coupled through the realization of a click connection and are provided such that they can be coupled by a coupling movement according to a second motional direction which lies virtually perpendicular to the said coupling plane, such that the coupling of the first and the second coupling means is effected automatically through a mutual rotation of the coupling devices coupled by the coupling edge and the edge coupling means.

In practice, it is possible that the aforementioned 'first and second coupling means' can be coupled not only in one ideal relative coupling position of the coupling devices, but also in relative coupling positions which differ very little from this ideal relative coupling position. In an interpretation of the expression 'couplable in one relative coupling position' in this patent application, account must be taken of these differing relative coupling positions, and the reference to 'one relative coupling position' must be taken as a reference to the collection of relative coupling positions which comprises both the ideal relative coupling position and the differing relative coupling positions.

The positioning means ensure an easy and reliably correct placement (positioning) of the coupling devices with respect to one another, in the relative coupling position in which the first and second coupling means can be coupled. During this placement or positioning, the coupling edge and the edge coupling means are connected, so that the coupling devices are already partially coupled to one another and only have to be displaced with respect to one another according to the longitudinal direction of the coupling edge. The coupling edge here acts as a guide element, whereby the displacement can be effected particularly easily. Moreover, in this partially coupled state, at least a portion of the weight of the second coupling device and the object is borne by the coupling edge, so that the correct placement proceeds yet more easily.

The positioning is thus effected by displacing the coupling edge and the edge coupling means relative to one another in the connected state. The positioning means facilitate the positioning, for example by making the relative displacement of the coupling devices more difficult as soon as the correct relative coupling position (i.e. the coupling position in which the first and second coupling means are couplable) has been reached, or by alerting the user in any way (by visual, sensory, audible means) during this relative displacement that this correct relative coupling position has been reached, or by ensuring that the edge coupling means are guided to this correct position on the coupling edge or assume this correct position more easily compared with other relative coupling positions, or by a combination of two or more of these options.

Once the couplings are connected to one another, the positioning means also ensure a limitation of the mutual freedom of movement of the connected coupling devices according to the longitudinal direction of the coupling edge.

The first and second coupling means ensure a limitation of the mutual freedom of movement of the connected coupling devices in a direction perpendicular to the coupling plane A that extends in between the connected coupling devices. The coupling edge can be the edge of a component of relatively small transverse dimension. This can be, for example, the edge of a plate-like component. The edge can terminate with a free side which is flat or angular or rounded. The edge can also be formed by a tubular or thread-like component. This component can have any cross section, such as, for example, a circular, oval, triangular, rectangular, square or polygonal cross section. This edge does not necessarily have a rectilinear course. The coupling edge can be, for example, the edge of a trough-shaped element.

The edge coupling means can be, for example, one or more hook-in elements, which can hook onto the coupling edge. The said edge coupling means are, for example, one or more hooks, one or more flanges or edge portions, or one or more elements which have an open space or an opening in which the coupling edge, or a portion thereof, can be received.

The connection between the coupling edge and the edge coupling means can here be established in a simple manner. It is very easy and simple to bring edge coupling means into cooperation with a coupling edge. The first coupling device can be fastenable in such a way and/or be integrated in a component of the vehicle in such a way that the portable object, through the execution of a downward movement, can be brought into cooperation with the coupling edge. A downward coupling movement of this type is the easiest movement with an object which is relatively heavy.

The coupling edge can also be arranged in such a way along a component of the vehicle that the object, in the execution of the coupling movement up to the coupling edge, is guided by this component. Thus the first coupling device can be provided on that side of a component which in use extends virtually horizontally, so that the object in contact with this side can be displaced in order to bring its edge coupling means into cooperation with the coupling edge. This guidance facilitates the coupling movement.

Moreover, the positioning means ensure that the object, in the connected state of the coupling edge and the edge coupling means, can be positioned in a defined coupling position according to the longitudinal direction of the coupling edge with a relatively small effort, wherein the first and the second coupling means stand in a mutual coupling position which makes their coupling possible.

If the first coupling device is constructed as a component which is fastenable to the vehicle, one can oneself determine at what place the object is fastened to the vehicle. With the aid of such a device, it is possible to ensure that an object is fastenable to the vehicle only in the most suitable and the most secure position.

In normal use, the first coupling device, which forms part of the vehicle, will remain virtually stationary during the coupling of the coupling devices. The second coupling device, which forms part of the object, is brought up to the first coupling device by the movement of the object.

The first coupling device can be constructed such that it is fastenable to a component of the vehicle, such as, for example, a luggage carrier, a frame, a mudguard, a saddle of a bicycle. With this device it is thus possible to fasten an object, such as, for example, a bag, to any type of vehicle, such as a bicycle or moped, regardless of the structure of the luggage carrier and regardless of whether there is a luggage carrier present.

The vehicle can also be made such that it already comprises a component in which the first coupling device is integrated. Where the vehicle is a bicycle with a luggage carrier, the first coupling device can, for example, form part of the luggage carrier, the frame, the mudguard, the handlebar of the bicycle.

The second coupling device can be constructed such that it is fastenable to a portable object. Thus objects which are not provided for fastening to a bicycle or other vehicle can also be converted to objects with an integrated second fastening device, which objects can easily be fastened to a vehicle provided with a first fastening device.

The second coupling device can be fastened to the object by the user also at the place most suitable for him/her.

Any portable object can also be made such that it already comprises a second coupling device integrated therein, or can be equipped with a component in which a second coupling device is integrated. According to the invention, the second coupling device can be constructed such that this disturbs the aesthetic appearance of the object not at all or only to a very small degree.

The advantage of a fastening device whereof the two coupling devices are fastenable to respectively a vehicle and a portable object consists in the fact that an object and a vehicle which are not equipped for the abovementioned fastening can be converted such that the object can be quickly, simply and easily fastened to the vehicle at the desired place in order to transport the object in a comfortable and secure manner during journeys with the vehicle. The coupling devices can then be sold as separate components and be provided to be fastened with known fastening means, such as, for example, with the aid of screws or glue, to the vehicle and the bag respectively.

The first and the second coupling device are connected to each other at at least two places, on the one hand via the coupling edge and the edge coupling means cooperating therewith, and on the other hand by the first and the second coupling means. As a result, this connection is a solid connection which ensures that an object that is fastened with the aid of this device has a very limited freedom of movement with respect to the vehicle. This ensures a stable fastening of the object, which is naturally also beneficial to comfort and safety.

When the second coupling device forms part of an object, the object, at least at the place where the second coupling device is provided, is preferably made of a material having a relatively high stiffness. As a result, the distance between the edge coupling means and the second coupling means is maintained, whereby the second coupling means can always be positioned opposite the first coupling means of the first coupling device.

The further distant the coupling edge and the first coupling means are from each other, the smaller is the freedom of movement of the object with respect to the vehicle and the greater its stability in the fastened state.

The coupling edge and the first coupling means can form part of a whole or be provided on a common supporting structure, or be connected to each other in any way.

These first and second coupling means are then preferably also provided to be automatically coupled by bringing them in contact with each other, without an additional operation or manipulation of control elements or components being necessary for this coupling. Preferably, the coupling can be realized by moving the coupling means closer together according to a fluid coupling movement until they enter automatically into cooperation.

The first and second coupling means are preferably complementary click connection means, the connection of which is releasable by means of a control element which forms part of the first coupling device.

Since the control element forms no part of the second coupling device, which is connected to the object or is integrated therein, a minimal impact on the aesthetic appearance of the object is obtained.

The control element allows these coupling means to be disconnected from each other in a simple manner. An object fastened to a vehicle with the aid of this device can hence be fastened to the vehicle in a simple manner and disconnected very easily from the vehicle. Since the control element forms part of the first coupling device, the second coupling device can be constructed such that it occupies little space and the aesthetic appearance of the bag is not or scarcely disturbed. In an alternative embodiment, the control element can form part of the second coupling device.

Preferably, the coupling edge and the first coupling means are provided at a fixed distance apart on the first coupling device, and/or the edge coupling means and the second coupling means are provided at a fixed distance apart on the second coupling device.

In a preferential embodiment, the distance between the coupling edge and the first coupling means is fixed, whilst the distance between the edge coupling means and the second coupling means is variable but is limited to a maximum. This maximum preferably conforms to the said fixed distance.

In another preferential embodiment, the distance between the edge coupling means and the second coupling means is fixed, whilst the distance between the coupling edge and the first coupling means is variable but is limited to a maximum. This maximum preferably conforms to the said fixed distance.

These embodiments ensure an additional limitation of the freedom of movement of the object with respect to the vehicle.

The coupling devices are provided to extend in the coupled state, according to an intermediate coupling plane, one opposite the other, and the coupling edge and the edge coupling means can be coupled by a relative movement of the coupling devices according to a first motional direction which is virtually parallel to the said coupling plane. Virtually parallel here means that the motional direction can form an angle of no more than approximately 30° with respect to the coupling plane.

The coupling plane is the intermediate plane according to which the two coupled fastening devices extend one opposite the other. In most cases, this coupling plane extends along a boundary of the component to which the first fastening device is fastened. This boundary can hence act as a guide during the fastening movement.

The connection of the edge coupling means and the coupling edge can very easily be made by a coupling movement according to a motional direction which extends virtually according to the coupling plane.

When, for example, a portable object is fastened to the side of a luggage carrier, the coupling plane defined by the coupling devices will extend along those elements of the luggage carrier which run next to the wheel and which laterally delimit this luggage carrier. The cooperation of the coupling edge and the edge coupling means can then be effected by lowering the object downwards along this delimiting structure. The downward movement of a relatively heavy object is naturally much simpler and easier than a motional direction which differs a lot therefrom, such as, for example, a horizontal fastening movement. The delimiting structure of the luggage carrier which extends more or less according to the coupling plane and can guide the object makes the fastening movement still easier.

When, for example, a portable object is fastened to the top side of a luggage carrier, the coupling plane defined by the coupling devices will also extend more or less horizontally along the horizontally running elements of the luggage carrier which delimit this luggage carrier at the top. The cooperation of the coupling edge and the edge coupling means can then be effected by resting the object on these horizontal elements and subsequently shifting them so that the edge coupling means enter into cooperation with the coupling edge. The delimiting structure of the luggage carrier, which extends more or less according to the coupling plane and can guide the object, makes the fastening movement, here too, somewhat easier.

The first and second coupling means are provided such that they can be coupled by a coupling movement according to a second motional direction which lies virtually perpendicular to the said coupling plane.
Virtually perpendicular here means that the motional direction can form an angle of no more than approximately 30° with respect to the direction perpendicular to the coupling plane.

The edge coupling means and the coupling edge can be brought into cooperation by a relative movement of the coupling devices according to a first motional direction which is virtually parallel to the said coupling plane, and the coupling means of every second set of coupling means are couplable according to a second motional direction which lies virtually perpendicular to the said coupling plane. These two said motional directions, in order to connect the coupling means of the respective sets one to another, here lie virtually perpendicular to each other. As a result, a very good connection between the coupling devices is possible and the unwanted release thereof is prevented.

The coupling edge and the edge coupling means are constructed such that the first and the second coupling device are connected to each other in a mutually rotatable manner through the connection of the coupling edge and the edge coupling means, whilst the first and the second coupling means can be coupled through a mutual rotation of the coupling devices coupled by the coupling edge and the edge coupling means.

The coupling of the first and the second coupling means can hence be effected automatically and without any additional positioning of the coupling devices. The first and second coupling means and the coupling edge and the edge coupling means can also be placed such that the gravitational force exerted on the object produces or facilitates the said coupling rotation.

The edge coupling means preferably consist of one elongate coupling body. The two coupling devices can hence be very compactly constructed. As a result of the elongate shape, there is connection over a certain length, whilst the first and second coupling means realize an additional connection at a place which does not lie on the axis of the coupling body or the extension thereof. This produces a particularly stable connection.

The positioning means preferably comprise at least one threshold element, which is provided to deter a displacement of the edge coupling means, in the state connected to the coupling edge and substantially according to the longitudinal direction of this coupling edge, from the relative coupling position in which the first and second coupling means are couplable.

The positioning means can make the displacement of the edge coupling means by mechanical method more difficult. This can also be done, however, by means of elements which oppose this displacement by means of a magnetic force.

The displacement is made more difficult as soon as the second coupling device has found its way into the said defined coupling position.

Preferably there are two threshold elements, which deter the displacement of the edge coupling means in both motional directions according to the longitudinal direction of the coupling edge.

Preferably, at least one threshold element comprises an edge, projection, groove, notch or raised structure provided on the coupling edge.

The coupling edge comprises, for example, a first edge portion and a second edge portion recessed with respect to that first edge portion, whilst the second edge portion merges at both ends, via respective obliquely running third edge portions, into the first edge portion, wherein the third edge portions form the said threshold elements.

The coupling edge is preferably an edge, extending according to the longitudinal axis, along an elongate open coupling space, preferably a trough shape of substantially U-shaped profile, wherein the edge coupling means comprise a coupling body which can be rotatably received in the coupling space, so that the first and the second coupling device are hereby connected in a mutually rotatable manner.

The fitting of each coupling body in the coupling space is simple. The coupling of the first and the second coupling means can specifically be realized in a simple manner by a mutual rotation of the first and the second coupling device up to each other. In this, the coupling means of each second set of coupling means enter into cooperation without the need for any additional positioning of the coupling devices.

The elongate open coupling space is preferably delimited at both ends by end edges which extend virtually transversely to the longitudinal direction, wherein these end edges form the said threshold elements.

The said open coupling space can be delimited by a concave surface, whilst the edge coupling means comprise a coupling body which can be received in a form-fitting manner in the thus delimited coupling space.

In a particular embodiment, the open coupling space is elongate and extends according to an axis, whilst each first coupling means of the first coupling device is provided at a place which is distant from this axis or its extension.
Preferably, the said coupling body occupies virtually the entire length of the coupling space.

In a very preferential embodiment, the first coupling device is constructed as a substantially T-shaped element having a horizontal top part, on which the coupling edge is formed, and a leg, which connects to the top part and comprises a first coupling means.

This T-shape allows a rigid connection between the coupling devices. Level with the horizontal top part there is a connection which extends according to the longitudinal direction of the coupling edge, and level with the connecting leg there is a connection which extends according to a direction perpendicular to this longitudinal direction. The coupled coupling devices are hence virtually unable to move with respect to each other.

The appearance of a vehicle having the first coupling device, and the appearance of a bag having the second coupling device, can here be realized in an aesthetically sound manner. The T-shaped second coupling device can be compactly constructed, so that the appearance of the bag is little disturbed.

In another very preferential embodiment, the second coupling device is constructed as a substantially T-shaped element having a horizontal top part, on which the edge coupling means are formed, and a leg, which connects to the top part and comprises a second coupling means.

The first coupling device and/or the second coupling device are preferably constructed as a rigid whole. This whole can be composed of a plurality of interconnected parts.

A coupling device of this type can be very compactly constructed and, from an aesthetic viewpoint, is more readily acceptable than the existing coupling devices.

A second coupling device of this type can also be fastened on objects made of flexible material, whilst a fixed distance between the edge coupling means and the second coupling means remains guaranteed. This fixed distance naturally conforms to the distance between the coupling edge and a first coupling means on the first coupling device. Thus a rigid and firm connection between an object and a vehicle can be obtained, even when the object consists of flexible material, such as in a bag made substantially of fabric.

A rigid whole can be fastened with simple means to a vehicle or a portable object. An element of this type is also easily simply produced from one or more components to be joined together.

At least one first coupling means preferably comprises a pressure element, which is provided to exert on the second coupling device, in the coupled state of the coupling devices, a force delivered by a spring element, which force has a force component in the first motional direction.

Since the spring element exerts a force on the second coupling device, it keeps the edge coupling means in cooperation with the coupling edge when the coupling devices are interconnected. The second coupling device hence does not come loose from the first coupling device when this is not desired.
Through the application of a force which opposes the force delivered by the spring element, the connection between the two coupling devices can be re-broken, for example by means of the said control element.

The said portable object is preferably a bag, a basket or a suitcase, or a similar product, whilst the vehicle is preferably a bicycle, an electric bicycle or a moped.

The objects of this invention are also achieved by providing an assembly of a vehicle, such as a bicycle or a moped, and a portable object, having the characteristics indicated in the second paragraph of this description; and wherein, according to this invention, the coupling edge and the edge coupling means are connectable in several relative positions of the coupling devices, whilst the first and second coupling means are couplable only in one of the said relative coupling positions of the coupling devices, and the coupling edge and/or the edge coupling means comprise positioning means to position the coupling devices with connected coupling edge and edge coupling means, according to the longitudinal direction of the coupling edge, in the said relative coupling position in which the first and the second coupling means are couplable.

The object comprises the second coupling device and can be produced such that the second coupling device is integrated in the object. The second coupling device can also be fastened to the object or can be partly integrated in and partly fastened to the obj ect.

The vehicle, such as a bicycle or the like, comprises the first coupling device. The relevant component of the vehicle can here be produced such that the first coupling device is wholly or partially integrated in the vehicle. The first coupling device can also be fastened to the vehicle or can be partly integrated in and be partly fastened to the vehicle.

Preferably, the vehicle remains virtually stationary during the mutual coupling of the bag to the vehicle. The bag is then brought up to the vehicle.

Since the first and the second coupling device are connected to each other at at least two places, this connection is a solid connection which ensures that a bag has little freedom of movement with respect to the vehicle when the bag is connected to the vehicle.

It is very easy and simple to bring edge coupling means into cooperation with a coupling edge. The first coupling device can be fastenable in such a way and/or be integrated in a component of the vehicle in such a way that the portable object, through the execution of a downward movement, can be brought into cooperation with the coupling edge. A downward coupling movement of this type is the easiest movement with an object which is relatively heavy.

The coupling edge can also be arranged in such a way along a component of the vehicle that the object, in the execution of the coupling movement, is guided up to the coupling edge by this component. Thus the first coupling device can be provided on that side of a component which in use extends virtually horizontally, so that the object in contact with this side can be displaced in order to bring its edge coupling means into cooperation with the coupling edge. This guidance facilitates the coupling movement.

Moreover, the positioning means ensure that the object, after having been hooked onto the coupling edge, can be positioned in a defined coupling position according to the longitudinal direction of the coupling edge with a relatively small effort, wherein the first and the second coupling means stand in a mutual coupling position which makes their coupling possible.

The coupling devices are provided to extend in the coupled state, according to an intermediate coupling plane, one opposite the other, whilst the coupling edge and the edge coupling means can be coupled by a relative movement of the coupling devices according to a first motional direction which is virtually parallel to the said coupling plane.

The coupling edge and the edge coupling means are constructed such that the first and the second coupling device are connected to each other in a mutually rotatable manner through the connection of the coupling edge and the edge coupling means, whilst the first and the second coupling means can be coupled through a mutual rotation of the coupling devices coupled by the coupling edge and the edge coupling means.

The coupling of the coupling means is hereby effected by a simple rotation of the coupling devices already connected and correctly positioned on the coupling edge.

In a very preferential embodiment of this assembly, the positioning means comprise at least one threshold element, and the threshold element is provided to deter a displacement of the edge coupling means in the state connected to the coupling edge, and substantially according to the longitudinal direction of the coupling edge, from the relative coupling position in which the first and second coupling means are couplable.

The positioning means can make the displacement of the edge coupling means by mechanical method more difficult. This can also be done, however, by means of elements which oppose this displacement by means of a magnetic force.

The displacement is made more difficult as soon as the second coupling device has found its way into the said defined coupling position.

Preferably there are two threshold elements, which deter the displacement of the edge coupling means in both motional directions according to the longitudinal direction of the coupling edge.

Preferably, at least one threshold element comprises an edge, projection, groove, notch or raised structure provided on the coupling edge.

Further characteristics and advantages emerge sufficiently from that which has been described further above with regard to the fastening device.

In a very preferential embodiment, the assembly comprises a device for detachably fastening a bag to a vehicle, such as described above.

In the hereinafter following description, a device for detachably fastening a portable bag or basket to a bicycle and an assembly according to this invention are described in more detail. This description serves merely to further illustrate the characteristics of the invention and thus cannot be regarded as a limitation of the protection for this invention which is claimed in the claims of this patent application, nor of the field of application thereof.

In this description, reference is made by means of reference numerals to the accompanying figures, whereof
- **Figure 1** is a perspective representation of a luggage carrier comprising a first coupling device according to a first embodiment, wherein the first coupling device extends level with the side of the luggage carrier;
- **Figure 2** is a perspective representation of the luggage carrier represented in Figure 1;
- **Figure 3** is a perspective representation of a bag comprising a second coupling device;
- **Figure 4** is a perspective representation of the bag represented in Figure 3;
- **Figure 5** is a rear view of the luggage carrier represented in Figures 1 and 2, wherein a bag as represented in Figures 3 and 4 is moved up to the luggage carrier;
- **Figure 6** is a rear view of the luggage carrier represented in Figures 1 and 2, during the fastening of a bag, as represented in Figures 3 and 4, to the luggage carrier;
- **Figure 7** is a rear view of the luggage carrier represented in Figures 1 and 2, wherein a bag as represented in Figures 3 and 4 is fully fastened to the luggage carrier;
- **Figure 8** represents a cross section of a detail of the luggage carrier represented in Figures 1 and 2 and the bag as represented in Figures 3 and 4, during the fastening of the bag to the luggage carrier;
- **Figure 9** represents a cross section of a detail of the luggage carrier represented in Figures 1 and 2 and the bag as represented in Figures 3 and 4, wherein the bag is fully fastened to the luggage carrier;
- **Figure 10** represents a cross section of a detail of the luggage carrier represented in Figures 1 and 2 and the bag as represented in Figures 3 and 4, wherein the bag is redisconnected from the luggage carrier;
- **Figure 11** is a perspective representation of a luggage carrier comprising a first coupling device according to a second embodiment, wherein the first coupling device extends level with the top side of the luggage carrier;
- **Figure 12** is a perspective representation of a basket comprising a second coupling device;

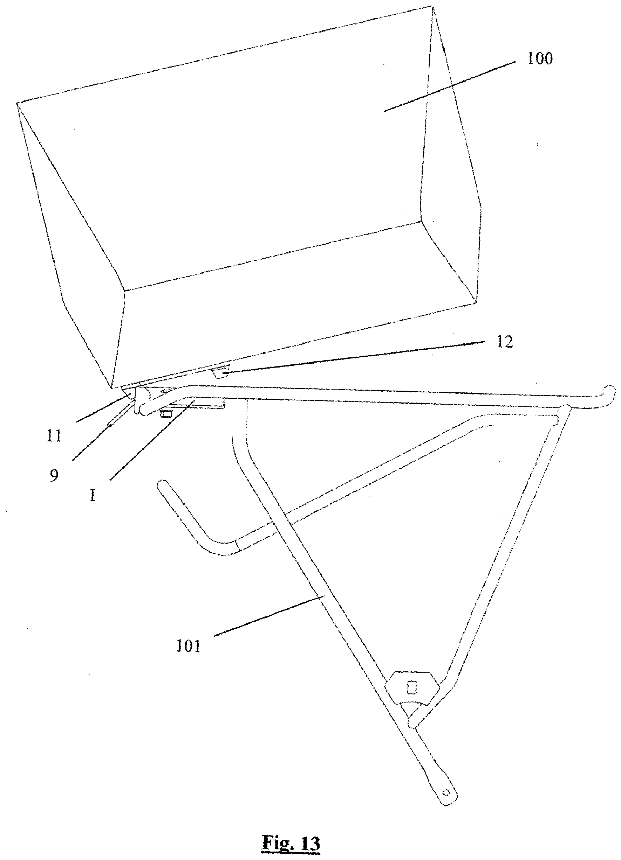

- **Figure 13** is a rear view of the luggage carrier represented in Figure 11, wherein a basket as represented in Figure 12 is fastened to the luggage carrier;

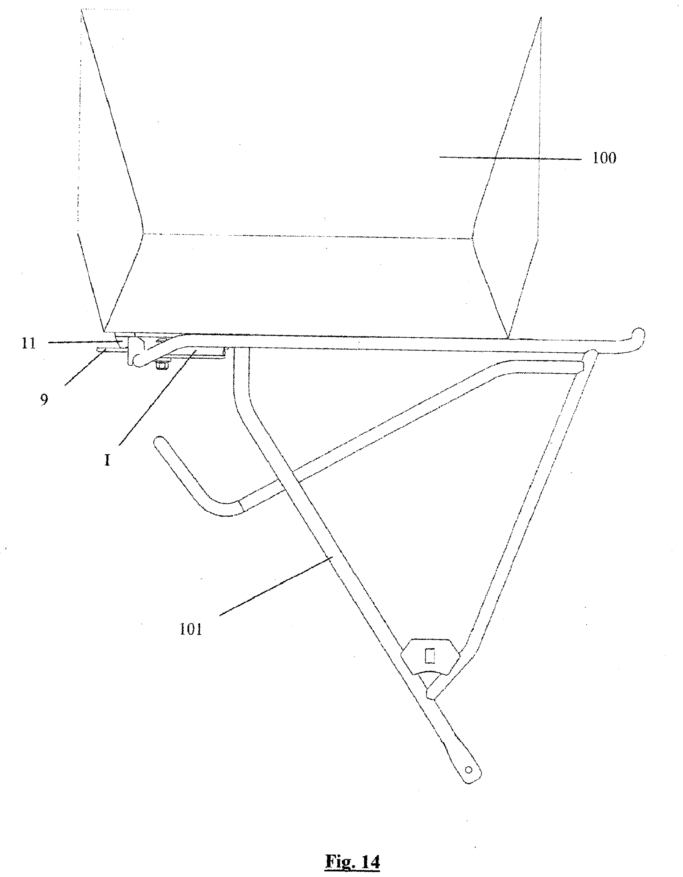

- **Figure 14** is a rear view of the luggage carrier represented in Figure 11, wherein a bag as represented in Figure 12 is fully fastened to the luggage carrier;
- **Figure 15** is a front view of a luggage carrier comprising a first coupling device according to a third embodiment;
- **Figure 16** is a perspective representation of a luggage carrier comprising two first coupling devices according to a fourth embodiment;
- **Figure 17** is a perspective representation of a portion of a luggage carrier comprising a first coupling device according to a fifth embodiment;
- **Figure 18** is a perspective representation of a portion of a luggage carrier comprising a first coupling device according to a sixth embodiment of the invention;
- **Figure 19** is a perspective representation of a portion of a luggage carrier comprising a first coupling device according to a seventh embodiment.

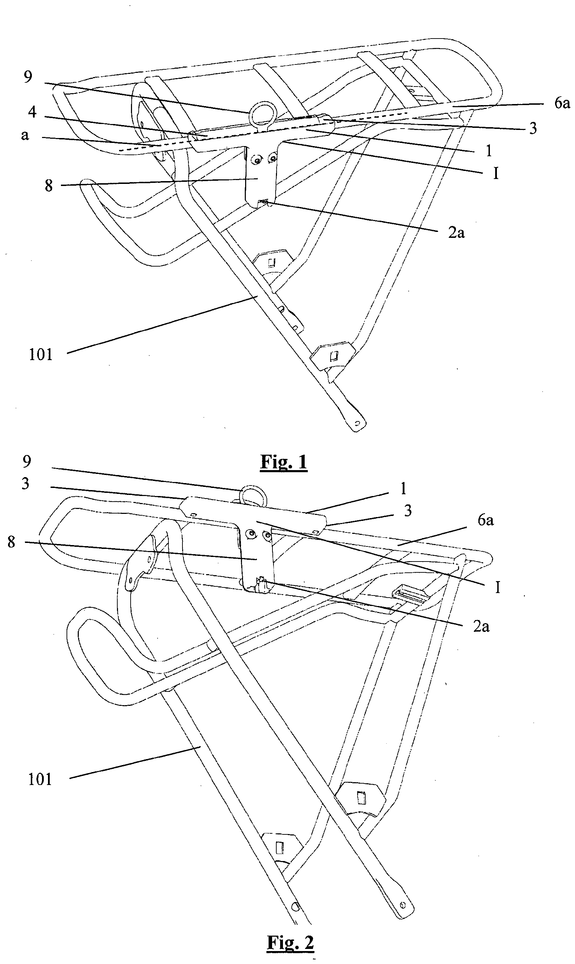

This invention relates to an assembly comprising a bicycle and a portable object (100), wherein the portable object (100) is detachably fastenable to a luggage carrier (101) of the bicycle. For this, the luggage carrier (101) comprises at least one rigid first coupling device (I), whilst the portable object (100) comprises a rigid second coupling device (II) which can be coupled to this first coupling device (I). Various embodiments of luggage carriers (101) provided with at least one first coupling device (I) are represented in Figures 1, 2, 11 and 15 to 19. For the sake of simplicity, the complete luggage carrier (101) is not always represented.

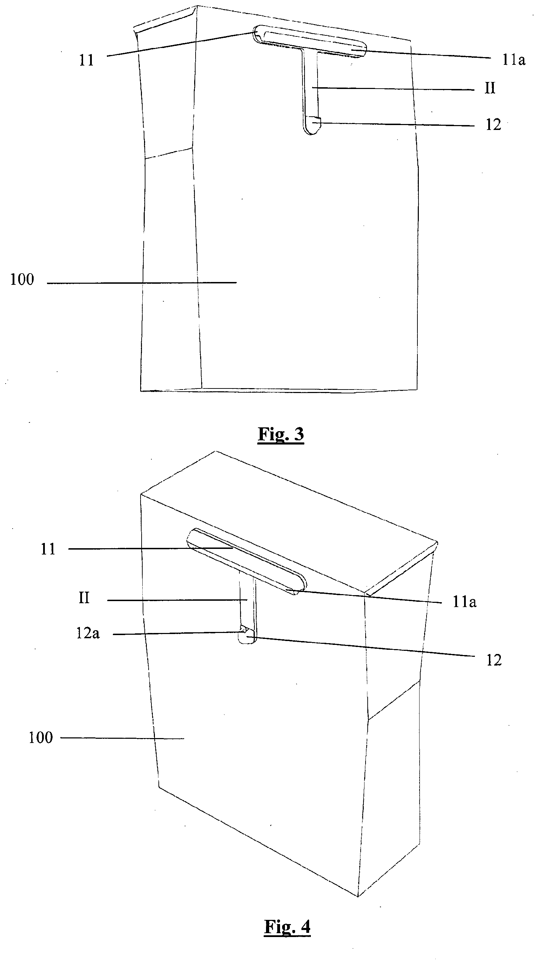

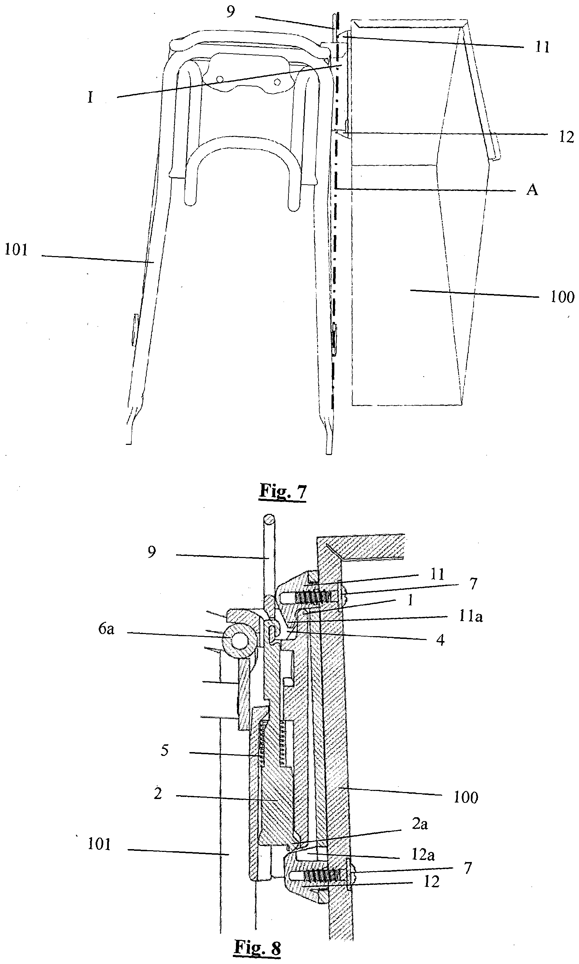

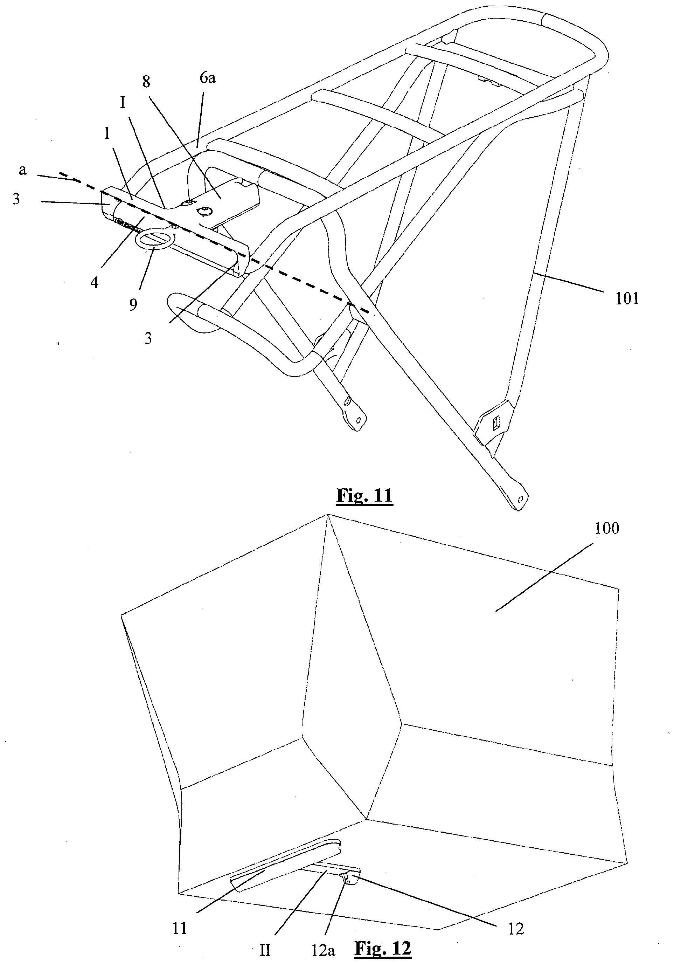

In Figures 3, 4 and 12, a portable object (100) according to the invention is represented. In Figures 3 and 4, the portable object (100) is a bag and in Figure 12 the portable object (100) is a basket. These portable objects (100) comprise the same second coupling device (II). Naturally, yet other types of second coupling devices (II) are also possible. In the case of the bag (100), the second coupling device (II) is fastened to the back of the bag (100) with the aid of screws (7). These screws (7) are visible in the cross sections represented in Figures 8 to 10. In the case of the basket (100), the second coupling device (II) is fastened to the bottom side of the basket (100).

Each first coupling device (I) comprises an elongate coupling edge (1) and a first click connection means (2). The second coupling device (II) comprises a hook portion (11), which is connectable detachably, and displaceably according to the longitudinal direction of the coupling edge (1), to the coupling edge (1), and also comprises a second click connection means (12), which is couplable to the first click connection means (2). The portable object (100) is hence fastenable to the luggage carrier (101) at two places. In the fastened state, the portable object (100) extends opposite the luggage carrier (101) according to a coupling plane (A). The hook portion (11) comprises a hook (11a), which is hookable onto the coupling edge (1) by a relative movement of the portable object (100) with respect to the luggage carrier (101) according to a first motional direction (X) which is virtually parallel to the said coupling plane (A). In addition, the coupling edge (1) also comprises positioning means (3) in order to position the coupling devices (I), (II) with respect to each other, according to the longitudinal direction of the coupling edge (1), in a defined coupling position. In this defined coupling position, the first (2) and the second click connection means (12) can be brought into cooperation by a rotation of the second coupling device (II) up to the first coupling device (I) about an axis (a) extending according to the longitudinal direction of the coupling edge (1).

In the luggage carrier (101) which is represented in Figures 1, 2 and 11, the first coupling device (I) is fastenable to a topmost bar (6a) of the luggage carrier (101). Figures 1 and 2 represent a luggage carrier (101) according to a first embodiment, and Figure 11 represents a luggage carrier (101) according to a second embodiment. In both of the said embodiments, the first coupling device (I) is here constructed as a substantially T-shaped element having a horizontal top part, in which an elongate trough (4) is formed, and a leg (8), which connects to the top part and in which the first click connection means (2) is fitted. The trough (4) is elongate having a U-shaped profile with the open side directed upwards, and is delimited by two pairs of mutually oppositely situated edges. One pair of edges extends according to the longitudinal direction of the trough (4). One edge hereof is the said coupling edge (1). The other pair of edges extends virtually perpendicular to the longitudinal direction of the trough (4) and forms the positioning means (3) of the coupling edge (1). These positioning means (3) are provided to facilitate the positioning of the coupling devices into the relative coupling position which allows the coupling of the first and second coupling means. This is obtained by virtue of the fact that these positioning means make the departure from this correct position (by displacement of the hook portion (11) in the state connected to the coupling edge (1), and according to the longitudinal direction of the coupling edge (1)) more difficult.

The first click connection means (2) is a bar-shaped element, which is arranged in the leg (8) so as to be displaceable counter to the spring force of a helical spring (5). The bar-shaped element is displaceable according to a direction which is virtually parallel to the coupling plane (A) and extends perpendicular to the longitudinal direction of the trough (4) (and thus lies also perpendicular to the longitudinal direction of the coupling edge (1)).

In addition, the first click connection means (2) comprises, at its end most distant from the trough (4), a projection (2a). The first click connection means (2) is connected to a cord (9). Through upward stretching of the cord, the first click connection means (2) can be displaced counter to the spring force up to the trough (4).

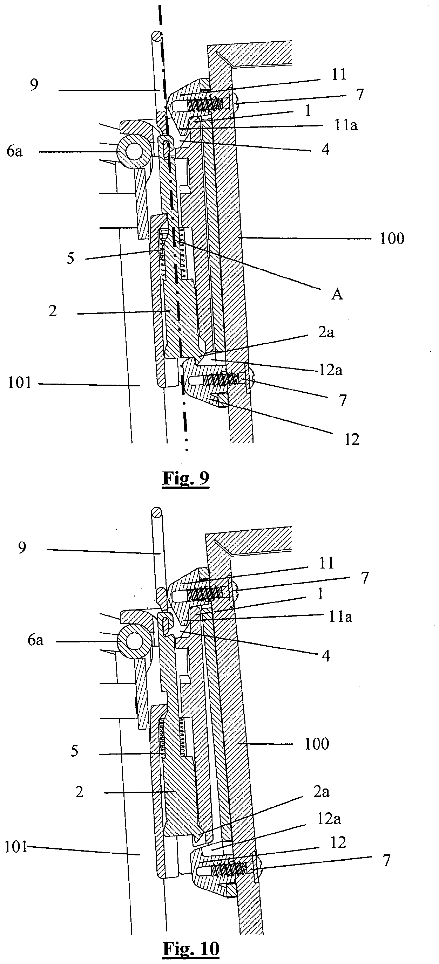

In Figures 1 and 2, the first coupling device (I) extends level with a side of the luggage carrier (101). The coupling plane (A) is here a virtually vertically extending plane. This coupling plane (A) is represented in Figure 9. In Figure 11, the first coupling device (I) extends level with the top side of the luggage carrier (101). The coupling plane (A) is here a virtually horizontally extending plane.

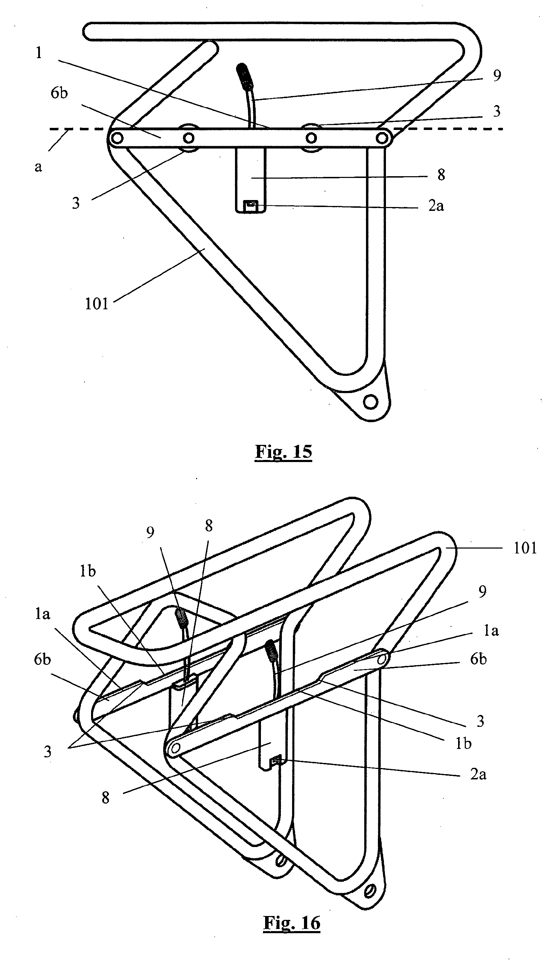

A luggage carrier (101) having a first coupling device (I) according to a third embodiment is represented in Figure 15. This first coupling device (I) is fastened to the luggage carrier (101) and comprises one elongate bar (6b), which is fastened to the luggage carrier (101) such that it extends virtually horizontally. This bar (6b) forms the said coupling edge (1). The positioning means (3) are here threshold elements, which are fastened at a distance apart on the bar (6b). These threshold elements are provided to deter a displacement of the hook portion (11) in the state connected to the coupling edge (1), and substantially according to the longitudinal direction of the coupling edge (1). This first coupling device (I) also comprises an elongate leg (8), which is fastened to the bar (6b) and extends between the threshold elements. The longitudinal direction of the leg (8) extends virtually perpendicular to a horizontally extending plane. In this leg (8), the first click connection element (2) is fitted. In the well-defined coupling position in which the hook portion (11) is coupled to the coupling edge (1) and extends between the threshold elements, the first (2) and the second click connection means (12) can be brought into cooperation.

A luggage carrier (101) having two first coupling devices (I) according to a fourth embodiment is represented in Figure 16. Each first coupling device (I) is fastened to the luggage carrier (101) and comprises one elongate bar (6b), which is fastened to the luggage carrier (101) in such a way that it extends virtually horizontally. This bar (6b) forms the coupling edge (1). The coupling edge (1) here comprises a first edge portion (1a) and a second edge portion (1b) recessed with respect to that first edge portion (1a), wherein the second edge portion (1b) merges at both ends, via respective obliquely running third edge portions, into the first edge portion (1a).

The third edge portions are the said positioning means (3). Each first coupling device (I) also comprises an elongate leg (8), which is fastened to the respective bar (6b) level with the second edge portion (1b). The longitudinal direction of each leg (8) extends according to a direction which lies virtually perpendicular to a horizontally extending plane. In each leg (8) is fitted the first click connection element (2).

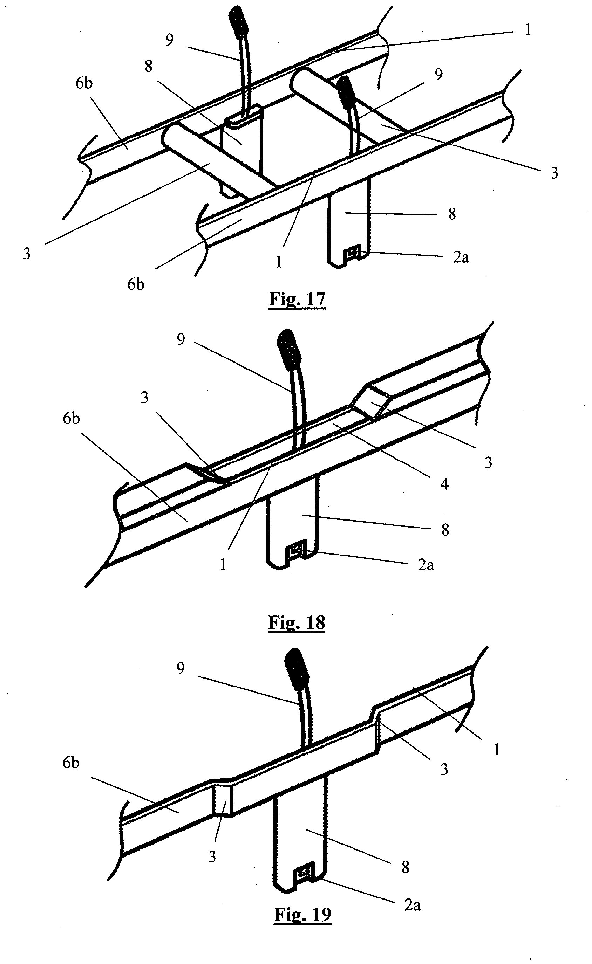

In Figure 17, a portion of a luggage carrier (101) having two first coupling devices (I) according to a fifth embodiment is represented, wherein the luggage carrier (101) comprises two horizontally extending first bars (6b), which extend side by side in parallel, and comprises at least two horizontally extending second bars, which connect these two first bars (6b) to each other, wherein the second bars extend perpendicular with respect to the two first bars (6b). Level with those portions of the first bars (6b) which extend between the two second bars, an elongate leg (8) of a respective first coupling device is in each case fastened to the first bars (6b). The longitudinal direction of each leg (8) extends virtually perpendicular to a horizontally extending plane. In each leg (8) is fitted the first click connection element (2). The second bars here form the positioning means (3) of the first coupling devices (I), and the first bars (6b) form the coupling edges (1). In the position in which the hook portion (11) is coupled to the coupling edge (1) and extends between the second bars, the first (2) and the second click connection means (12) can be brought into cooperation.

Figure 18 shows a portion of a luggage carrier (101) having a first coupling device (I) according to a sixth embodiment. The first coupling device (I) comprises at least one horizontally extending elongate bar (6b). Each bar (6b) comprises at the top an elongate notch having inclined end edges, and level with this notch an elongate leg (8) of a first coupling device is respectively fastened to the bar (6b). Each leg (8) extends virtually perpendicular to a horizontally extending plane. In each leg (8) is fitted a first click connection element (2). Level with the notch, each bar (6b) comprises a trough (4) delimited by two sets of mutually oppositely situated edges. The coupling edge (1) is here formed by an edge of one set. The edges of the other set and the inclined end edges of the notch, viewed according to the longitudinal direction of the coupling edge (1), form the positioning means (3).

Figure 19 shows a portion of a luggage carrier (101) having a first coupling device (I) according to a seventh embodiment. The luggage carrier (101) comprises at least one horizontally extending elongate bar (6b). The bar (6b) has end parts which extend in line and, via obliquely laterally directed transition parts, merge into a central portion which is laterally displaced with respect to the end parts. The bar (6b) forms the coupling edge (1). The obliquely running transition parts are the said positioning means (3). To the central portion is fastened an elongate leg (8), which stands virtually perpendicular to a horizontally extending plane. In this leg (8) is fitted the first click connection element (2). In the position in which the hook portion (11) is coupled to the coupling edge (1) and to the central portion thereof, the first (2) and the second click connection means (12) can be brought into cooperation.

In the third to seventh embodiments of the luggage carrier (101) having the first coupling device (I), the first click connection means (2) is a bar-shaped element which is arranged in the said leg (8) displaceably counter to a spring force, according to a direction extending virtually according to the longitudinal direction of the leg (8). In addition, the first click connection means (2) comprises at the end most distant from the coupling edge (1) a projection (2a). The first click connection means (2) is connected to a cord (9). Through upward stretching of the cord, the first click connection means (2) can be displaced counter to the spring force of a helical spring (5). The coupling plane (A) is a virtually vertically extending plane.

The second coupling device (II) comprises a hook portion (11) having one hook (11a), which is hookable onto the coupling edge (1). The length of that portion of the coupling edge (1) which is located between the positioning means, viewed according to the longitudinal direction of the coupling edge (1), here virtually conforms to the corresponding length of the hook (11a). The hook (11a) can hence assume a position between the positioning means (3). In this position, the first and the second click connection means (2), (12) are mutually couplable. The hook (11a) can also however hook in another position onto the coupling edge (1) and be afterwards shifted (positioned) into the coupling position, in which the first (2) and second click connection means (12) are couplable. The positioning means (3) then indicate when this position has been reached.

The second click connection means (12) comprises a cavity (12a) in which the projection (2a) of the first click connection means (2) can be received. In addition, the hook portion (11) and the second click connection means (12) are connected to each other with a rigid component, so that the second coupling device (II) forms one rigid whole.

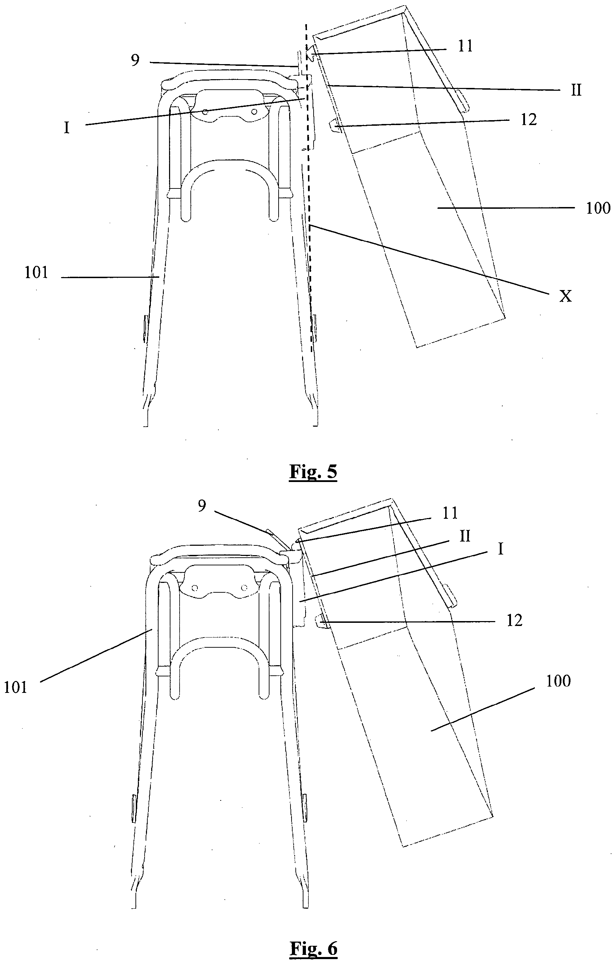

The fastening of the bag (100) to the luggage carrier (101) is here represented in Figures 5 to 10. This fastening is represented on the basis of a luggage carrier (101) of the first embodiment. This largely conforms to the fastening of a bag (100) to a luggage carrier (101) of the third to seventh embodiments.

First of all, the bag (100) is brought up to the luggage carrier (101). This is represented in Figure 5. After this, the hook (11a) is hooked onto the coupling edge (1). This is represented in Figures 6 and 8. In order to hook the hook (11a) onto the coupling edge (1), the bag (100) can be directly positioned such that the hook (11a) extends directly between the positioning means (3). This is not necessary, however. With the aid of the coupling edge (1) and the positioning means (3), the hook (11a) can namely be hooked into a position in which it is not located between the positioning means, and is afterwards shifted (positioned) into the desired position according to the longitudinal direction of the coupling edge (1), namely until the hook (11a) extends between the positioning means (3) and can hook fully onto the coupling edge (1).

During the actual hooking in place, there is always a relative movement of the coupling devices (I), (II) according to a first motional direction (X) which is virtually parallel to the said coupling plane (A). This motional direction virtually conforms to the direction of the gravitational force, so that the gravitational force assists in the hooking. In Figure 8, the hook (11a) is hooked onto the coupling edge (1). In the first embodiment of the luggage carrier (101), this means that the hook (11a) is partly in the trough (4).

The projection (2a) of the first click connection means (2) is here (in Figure 8) not yet in the cavity (12a) of the second click connection means (12). Once the hook (11a) has been hooked onto the coupling edge (1), the gravitational force will bring about a rotation of the bag (100) with respect to the luggage carrier (101), and this about a rotational axis (a) which extends virtually according to the longitudinal direction of the coupling edge (1). The bicycle can then be placed such that the gravitational force ensures that the first and the second click connection means (2), (12) move closer together. One can also oneself apply a force to the bag (100) in order to rotate the bag (100) up to the luggage carrier (101) so as thus to move the click connection means (2), (12) closer together. Through movement of the second click connection means (12) up to the first click connection means (2), the second click connection means (12) will come into contact with the projection (2a) of the first click connection means (2) and will exert a force thereon. As a result, the first click connection means (2) will be displaced upwards counter to the spring force until the projection (2a) is past the raised edge which delimits the cavity (see Figure 9) and, under the influence of the spring force, is displaced downwards again and is received in the cavity (12a). In Figure 9 it can be seen that the projection (2a) is in the cavity (12a). In order to get the projection (2a) back out of the cavity (12a), an upward force must be reapplied to the click connection means. This is done by means of the cord (9). The bag (100) hereby remains always firmly connected to the bicycle, including during cycling.

When it is wished to disconnect the bag (100) from the bicycle, the cord (9), as has been stated, can be pulled upwards in order to displace the first click connection means (2) counter to the spring force and thus to remove the projection (2a) from the cavity (12a). This is shown in Figure 10. After this, the hook (11a) can also be removed from the coupling edge (1).

The fastening of the basket (100) to the luggage carrier (101) according to the second embodiment is similar to that which has been described above. The only difference is that the coupling plane (A) then extends horizontally. The gravitational force will here always ensure that the second click connection means (12) moves up to the first click connection means (2) after the hook (11a) has been hooked onto the coupling edge (1).

## Claims

1. Device for detachably fastening a portable object (100) to a vehicle such as a bicycle or a moped, comprising
- a first coupling device (I), which is fastenable to and/or is at least partially integrated in a component (101) of a vehicle and which comprises a coupling edge (1) and at least one first coupling means (2), and
- a second coupling device (II), which is fastenable to and/or is at least partially integrated in an object (100) or a component thereof, comprising edge coupling means (11) to connect the second coupling device (II) detachably to the coupling edge (1), and a second coupling means (12), which is provided to be detachably coupled with the first coupling means (2),
wherein the coupling devices (I), (II) are provided to extend in the coupled state, according to an intermediate coupling plane (A), one opposite the other,
and in that the coupling edge (1) and the edge coupling means (11) can be coupled by a relative movement of the coupling devices (I), (II) according to a first motional direction (X) which is virtually parallel to the said coupling plane (A) and wherein the coupling edge (1) and the edge coupling means (11) are constructed such that the first (I) and the second coupling device (II) are connected to each other in a mutually rotatable manner through the connection of the coupling edge (1) and the edge coupling means (11), and in that the first (2) and the second coupling means (12) can be coupled through a mutual rotation of the coupling devices (I), (II) coupled by the coupling edge (1) and the edge coupling means (11),
**characterized in that** the coupling edge (1) and the edge coupling means (11) are connectable in several relative positions of the coupling devices (I), (II), whilst the first (2) and second coupling means (12) are couplable only in one of the said relative coupling positions of the coupling devices (I), (II), and **in that** the coupling edge (1) and/or the edge coupling means (11) comprise positioning means (3) to position the coupling devices (I), (II) with connected coupling edge (1) and edge coupling means (11), according to the longitudinal direction of the coupling edge (1), in the said relative coupling position in which the first (2) and second coupling means (12) are couplable, and wherein the first (2) and second coupling means (12) are provided to be coupled through the realization of a click connection and are provided such that they can be coupled by a coupling movement according to a second motional direction (Y) which lies virtually perpendicular to the said coupling plane (A), such that the coupling of the first and the second coupling means (12) is effected automatically through a mutual rotation of the coupling devices (I), (II) coupled by the coupling edge (1) and the edge coupling means (11), wherein virtually perpendicular means that the motional direction can form an angle of no more than approximately 30° with respect to the direction perpendicular to the coupling plane.

2. Device according to Claim 1, **characterized in that** the first (2) and second coupling means (12) are complementary click connection means, the connection of which is releasable by means of a control element (9) which forms part of the first coupling device (I).

3. Device according to one of the preceding claims, **characterized in that** the coupling edge (1) and the first coupling means (2) are provided at a fixed distance apart on the first coupling device (I), and/or **in that** the edge coupling means (11) and the second coupling means (12) are provided at a fixed distance apart on the second coupling device (II).

4. Device according to one of the preceding claims, **characterized in that** the positioning means (3) comprise at least one threshold element, and **in that** the threshold element is provided to deter a displacement of the edge coupling means (11) in the state connected to the coupling edge (1), and substantially according to the longitudinal direction of the coupling edge (1), from the said relative coupling position in which the first (2) and second coupling means (12) are couplable.

5. Device according to Claim 4, **characterized in that** at least one threshold element comprises an edge, projection, groove, notch or raised structure provided on the coupling edge (1).

6. Device according to claim 4 or 5, **characterized in that** the positioning means (3) comprise at least two threshold elements, which deter the displacement of the edge coupling means (11) in both motional directions according to the longitudinal direction of the coupling edge (1).

7. Device according to any of the claims 4 to 6, **characterized in that** the coupling edge (1) comprises a first edge portion (1a) and a second edge portion (1b) recessed with respect to that first edge portion (1a), and **in that** the second edge portion (1b) merges at both ends, via respective obliquely running third edge portions, into the first edge portion (1a), wherein the third edge portions form the said threshold elements.

8. Device according to one of the preceding claims, **characterized in that** the first coupling device (I) is constructed as a substantially T-shaped element having a horizontal top part, on which the coupling edge (1) is formed, and a leg (8), which connects to the top part and comprises a first coupling means (2), and/or **in that** the second coupling device (II) is constructed as a substantially T-shaped element having a horizontal top part, on which the edge coupling means (11) are formed, and a leg, which connects to the top part and comprises a second coupling means (12).

9. **Assembly** of a vehicle, such as a bicycle or a moped, and a portable object (100) which is detachably fastenable to that vehicle, **characterized in that** the assembly comprises a device as described in claims 1 to 8 and wherein a component (101) of the vehicle comprises the said first coupling device (I), and wherein the object (100) comprises the said second coupling device (II).

## Patentansprüche

1. Vorrichtung zur lösbaren Befestigung eines tragbaren Objekts (100) an einem Fahrzeug, wie z. B. einem Fahrrad oder einem Moped, die Folgendes umfasst:
- eine erste Kopplungsvorrichtung (I), die an einer Komponente (101) eines Fahrzeugs befestigbar ist und/oder zumindest zum Teil darin integriert ist und die einen Kopplungsrand (1) und mindestens ein erstes Kopplungsmittel (2) umfasst, und
- eine zweite Kopplungsvorrichtung (II), die an einem Objekt (100) oder einer Komponente davon befestigbar ist und/oder zumindest zum Teil darin integriert ist und umfasst Randkopplungsmittel (11) zur lösbaren Verbindung der zweiten Kopplungsvorrichtung (II) mit dem Kopplungsrand (1) und ein zweites Kopplungsmittel (12), das zur lösbaren Kopplung mit dem ersten Kopplungsmittel (2) vorgesehen ist,
wobei die Kopplungsvorrichtungen (I), (II) dahingehend vorgesehen sind, sich in dem gekoppelten Zustand entsprechend einer Zwischenkopplungsebene (A) einander gegenüber zu erstrecken, und dass der Kopplungsrand (1) und das Randkopplungsmittel (11) durch eine Relativbewegung der Kopplungsvorrichtungen (I), (II) in einer ersten Bewegungsrichtung (X), die nahezu parallel zu der Kopplungsebene (A) verläuft, gekoppelt werden können, und wobei der Kopplungsrand (1) und das Randkopplungsmittel (11) derart konstruiert sind, dass die erste (I) und die zweite Kopplungsvorrichtung (II) durch eine Verbindung des Kopplungsrands (1) und des Randkopplungsmittels (11) gemeinsam drehbar miteinander verbunden sind, und dass das erste (2) und das zweite Kopplungsmittel (12) durch eine gemeinsame Drehung der Kopplungsvorrichtungen (I), (II), die von dem Kopplungsrand (1) und dem Randkopplungsmittel (11) gekoppelt werden, gekoppelt werden können,
**dadurch gekennzeichnet, dass** der Kopplungsrand (1) und das Randkopplungsmittel (11) in verschiedenen Relativpositionen der Kopplungsvorrichtungen (I) (II) verbindbar sind, während das erste (2) und das zweite Kopplungsmittel (12) nur in einer der Relativkopplungspositionen der Kopplungsvorrichtungen (I), (II) koppelbar sind, und dass der Kopplungsrand (1) und/oder das Randkopplungsmittel (11) Positionierungsmittel (3) zur Positionierung der Kopplungsvorrichtungen (I), (II) mit dem verbundenen Kopplungsrand (1) und dem Randkopplungsmittel (11) entsprechend der Längsrichtung des Kopplungsrands (1) in der Relativkopplungsposition, in der das erste (2) und das zweite Kopplungsmittel (12) koppelbar sind, umfassen, und wobei das erste (2) und das zweite Kopplungsmittel (12) dahingehend vorgesehen sind, durch die Realisierung einer Schnappverbindung gekoppelt zu werden, und so vorgesehen sind, dass sie durch eine Kopplungsbewegung in einer zweiten Bewegungsrichtung (Y), die nahezu senkrecht zu der Kopplungsebene (A) verläuft, gekoppelt werden können, so dass das Koppeln des ersten und des zweiten Kopplungsmittels (12) automatisch durch eine gemeinsame Drehung der Kopplungsvorrichtungen (I), (II), die durch den Kopplungsrand (1) und das Randkopplungsmittel (11) gekoppelt werden, bewirkt wird, wobei nahezu senkrecht bedeutet, dass die Bewegungsrichtung einen Winkel von höchstens ungefähr 30° zu der senkrecht zu der Kopplungsebene verlaufenden Richtung bilden kann.

2. Vorrichtung nach Anspruch 1, **dadurch gekennzeichnet, dass** das erste (2) und das zweite Kopplungsmittel (12) komplementäre Schnappverbindungsmittel sind, dessen Verbindung durch ein Steuerelement (9), das Teil der ersten Kopplungsvorrichtung (I) ist, lösbar ist.

3. Vorrichtung nach einem der vorhergehenden Ansprüche, **dadurch gekennzeichnet, dass** der Kopplungsrand (1) und das erste Kopplungsmittel (2) in einem festgelegten Abstand voneinander an der ersten Kopplungsvorrichtung (I) vorgesehen sind und/oder dass das Randkopplungsmittel (11) und das zweite Kopplungsmittel (12) in einem festgelegten Abstand voneinander an der zweiten Kopplungsvorrichtung (II) vorgesehen sind.

4. Vorrichtung nach einem der vorhergehenden Ansprüche, **dadurch gekennzeichnet, dass** die Positionierungsmittel (3) mindestens ein Schwellenelement umfassen und dass das Schwellenelement dahingehend vorgesehen ist, eine Verlagerung des Randkopplungsmittels (11) in dem mit dem Kopplungsrand (1) verbundenen Zustand und im Wesentlichen gemäß der Längsrichtung des Kopplungsrands (1) aus der Relativkopplungsposition, in der das erste (2) und das zweite Kopplungsmittel (12) koppelbar sind, zu verhindern.

5. Vorrichtung nach Anspruch 4, **dadurch gekennzeichnet, dass** mindestens ein Schwellenelement einen Rand, einen Vorsprung, eine Nut, eine Kerbe oder eine erhabene Struktur, der bzw. die an dem Kopplungsrand (1) vorgesehen ist, umfasst.

6. Vorrichtung nach Anspruch 4 oder 5, **dadurch gekennzeichnet, dass** die Positionierungsmittel (3) mindestens zwei Schwellenelemente umfassen, die die Verlagerung des Randkopplungsmittels (11) in beiden Bewegungsrichtungen in der Längsrichtung des Kopplungsrands (1) verhindern.

7. Vorrichtung nach einem der Ansprüche 4-6, **dadurch gekennzeichnet, dass** der Kopplungsrand (1) einen ersten Randabschnitt (1a) und einen zweiten Randabschnitt (1b), der bezüglich dieses ersten Randabschnitts (1a) vertieft ist, umfasst und dass der zweite Randabschnitt (1b) an beiden Enden über jeweilige schräg verlaufende dritte Randabschnitte in den ersten Randabschnitt (1a) übergeht, wobei die dritten Randabschnitte die Schwellenelemente bilden.

8. Vorrichtung nach einem der vorhergehenden Ansprüche, **dadurch gekennzeichnet, dass** die erste Kopplungsvorrichtung (I) als ein im Wesentlichen T-förmiges Element mit einem horizontalen oberen Teil, an dem der Kopplungsrand (1) ausgebildet ist, und einem Schenkel (8), der mit dem oberen Teil verbunden ist und ein erstes Kopplungsmittel (2) umfasst, konstruiert ist und/oder dass die zweite Kopplungsvorrichtung (II) als ein im Wesentlichen T-förmiges Element mit einem horizontalen oberen Teil, an dem das Randkopplungsmittel (11) ausgebildet ist, und einem Schenkel, der mit dem oberen Teil verbunden ist und ein zweites Kopplungsmittel (12) umfasst, konstruiert ist.

9. Anordnung aus einem Fahrzeug, wie z. B. einem Fahrrad oder einem Moped, und einem tragbaren Objekt (100), das lösbar an diesem Fahrzeug befestigbar ist, **dadurch gekennzeichnet, dass** die Anordnung eine Vorrichtung nach Anspruch 1-8 umfasst, und wobei eine Komponente (101) des Fahrzeugs die erste Kopplungsvorrichtung (I) umfasst und wobei das Objekt (100) die zweite Kopplungsvorrichtung (II) umfasst.

## Revendications

1. Dispositif pour attacher de manière détachable un objet portatif (100) à un véhicule tel qu'une bicyclette ou une mobylette, comprenant
- un premier dispositif d'accouplement (I) qui peut être attaché à, et/ou qui est au moins en partie intégré dans, un composant (101) d'un véhicule et qui comprend un bord d'accouplement (1) et au moins un premier moyen d'accouplement (2), et
- un deuxième dispositif d'accouplement (II) qui peut être attaché à, et/ou qui est au moins en partie intégré dans, un objet (100) ou un composant de celui-ci, comprenant des moyens d'accouplement de bord (11) pour connecter le deuxième dispositif d'accouplement (II) de manière détachable au bord d'accouplement (1), et un deuxième moyen d'accouplement (12) qui est prévu pour être accouplé de manière détachable au premier moyen d'accouplement (2),
les dispositifs d'accouplement (I), (II) étant prévus pour s'étendre, dans l'état accouplé, suivant un plan d'accouplement intermédiaire (A), à l'opposé l'un de l'autre, et en ce que le bord d'accouplement (1) et les moyens d'accouplement de bord (11) peuvent être accouplés par un mouvement relatif des dispositifs d'accouplement (I), (II) suivant une première direction de déplacement (X) qui est sensiblement parallèle audit plan d'accouplement (A) et le bord d'accouplement (1) et les moyens d'accouplement de bord (11) étant construits de telle sorte que le premier (I) et le deuxième (II) dispositif d'accouplement soient connectés l'un à l'autre de manière à pouvoir tourner mutuellement par la connexion du bord d'accouplement (1) et des moyens d'accouplement de bord (11), et en ce que le premier (2) et le deuxième (12) moyen d'accouplement peuvent être accouplés par rotation mutuelle des dispositifs d'accouplement (I), (II) accouplés par le bord d'accouplement (1) et les moyens d'accouplement de bord (11),
**caractérisé en ce que** le bord d'accouplement (1) et les moyens d'accouplement de bord (11) peuvent être connectés dans plusieurs positions relatives des dispositifs d'accouplement (I), (II), tandis que le premier (2) et le deuxième (12) moyen d'accouplement peuvent être accouplés seulement dans l'une desdites positions d'accouplement relative des dispositifs d'accouplement (I), (II), et **en ce que** le bord d'accouplement (1) et/ou les moyens d'accouplement de bord (11) comprennent des moyens de positionnement (3) pour positionner les dispositifs d'accouplement (I), (II) avec le bord d'accouplement (1) et les moyens d'accouplement de bord (11) connectés, suivant la direction longitudinale du bord d'accouplement (1), dans ladite position d'accouplement relative dans laquelle le premier (2) et le deuxième (12) moyen d'accouplement peuvent être accouplés,
et le premier (2) et le deuxième (12) moyen d'accouplement étant prévus pour être accouplés par la réalisation d'une connexion à encliquetage et étant prévus de telle sorte qu'ils puissent être accouplés par un mouvement d'accouplement suivant une deuxième direction de déplacement (Y) qui est située sensiblement perpendiculairement audit plan d'accouplement (A), de telle sorte que l'accouplement du premier et du deuxième moyen d'accouplement (12) soit effectué automatiquement par une rotation mutuelle des dispositifs d'accouplement (I), (II) accouplés par le bord d'accouplement (1) et les moyens d'accouplement de bord (11), l'expression sensiblement perpendiculairement signifiant que la direction de déplacement peut former un angle ne dépassant pas plus d'environ 30° par rapport à la direction perpendiculaire au plan d'accouplement.

2. Dispositif selon la revendication 1, **caractérisé en ce que** le premier (2) et le deuxième (12) moyen d'accouplement sont des moyens de connexion par encliquetage complémentaires, dont la connexion peut être libérable au moyen d'un élément de commande (9) qui fait partie du premier dispositif d'accouplement (I).

3. Dispositif selon l'une des revendications précédentes, **caractérisé en ce que** le bord d'accouplement (1) et le premier moyen d'accouplement (2) sont prévus à une distance fixe l'un de l'autre sur le premier dispositif d'accouplement (I), et/ou **en ce que** les moyens d'accouplement de bord (11) et le deuxième moyen d'accouplement (12) sont prévus à une distance fixe l'un de l'autre sur le deuxième dispositif d'accouplement (II).

4. Dispositif selon l'une des revendications précédentes, **caractérisé en ce que** les moyens de positionnement (3) comprennent au moins un élément de seuil et **en ce que** l'élément de seuil est prévu pour s'opposer à un déplacement des moyens d'accouplement de bord (11) dans l'état connecté au bord d'accouplement (1), et sensiblement suivant la direction longitudinale du bord d'accouplement (1), depuis ladite position d'accouplement relative dans laquelle le premier (2) et le deuxième (12) moyen d'accouplement peuvent être accouplés.

5. Dispositif selon la revendication 4, **caractérisé en ce qu'**au moins un élément de seuil comprend un bord, une saillie, une gorge, une encoche ou une structure rehaussée prévus sur le bord d'accouplement (1).

6. Dispositif selon la revendication 4 ou 5, **caractérisé en ce que** les moyens de positionnement (3) comprennent au moins deux éléments de seuil qui s'opposent au déplacement des moyens d'accouplement de bord (11) dans les deux directions de déplacement suivant la direction longitudinale du bord d'accouplement (1).

7. Dispositif selon l'une quelconque des revendications 4 à 6, **caractérisé en ce que** le bord d'accouplement (1) comprend une première portion de bord (1a) et une deuxième portion de bord (1b) renfoncée par rapport à cette première portion de bord (1a), et **en ce que** la deuxième portion de bord (1b) fusionne aux deux extrémités, par le biais de troisièmes portions de bord respectives s'étendant obliquement, dans la première portion de bord (1a), les troisièmes portions de bord formant lesdits éléments de seuil.

8. Dispositif selon l'une des revendications précédentes, **caractérisé en ce que** le premier dispositif d'accouplement (I) est construit sous forme d'élément sensiblement en forme de T ayant une partie supérieure horizontale, sur laquelle est formé le bord d'accouplement (1), et une branche (8) qui se raccorde à la partie supérieure et qui comprend un premier moyen d'accouplement (2), et/ou **en ce que** le deuxième dispositif d'accouplement (II) est construit sous forme d'élément sensiblement en forme de T ayant une partie supérieure horizontale, sur laquelle sont formés les moyens d'accouplement de bord (11), et une branche qui se raccorde à la partie supérieure et qui comprend un deuxième moyen d'accouplement (12).

9. Assemblage d'un véhicule, tel qu'une bicyclette ou une mobylette, et d'un objet portatif (100) qui peut être attaché de manière détachable à ce véhicule, **caractérisé en ce que** l'assemblage comprend un dispositif selon les revendications 1 à 8 et dans lequel un composant (101) du véhicule comprend ledit premier dispositif d'accouplement (I), et dans lequel l'objet (100) comprend ledit deuxième dispositif d'accouplement (II).
